# EUROPÄISCHE PATENTSCHRIFT

(11) **EP 2 196 703 B1**
(45) Veröffentlichungstag und Bekanntmachung des Hinweises auf die Patenterteilung: **10.04.2013**
(21) Anmeldenummer: 09178393.6
(22) Anmeldetag: 08.12.2009
(51) Int. Cl.: F16H 27/08, E05B 65/12, B60R 25/02

(54) **Lenkradschloss**
Steering lock
Antivol de direction

(30) Priorität: 10.12.2008 DE 102008061256
(43) Veröffentlichungstag der Anmeldung: 16.06.2010
(73) Patentinhaber: Huf Hülsbeck & Fürst GmbH & Co. KG, 42551 Velbert (DE)
(72) Erfinder: Trischberger, Werner, 85229 Markt Indersdorf (DE)
(74) Vertreter: Patentanwälte Bals & Vogel

(56) Entgegenhaltungen:
- DE-A1- 2 505 663
- DE-A1- 4 419 178
- DE-A1- 10 105 032
- DE-A1-102005 027 777
- JP-A- 9 112 647
- JP-U- 63 025 855
- US-A- 1 758 206

## Beschreibung

Die Erfindung betrifft eine Getriebeeinheit mit einem Antriebselement und einem Abtriebselement, die relativ beweglich zueinander angeordnet sind, wobei in einem Eingriffzustand das Antriebselement mit dem Abtriebselement formschlüssig in Wirkverbindung steht, so dass eine Kraftübertragung vom Antriebselement auf das Abtriebselement erzielbar ist, und in einem Freilaufzustand das Antriebselement vom Abtriebselement entkoppelt ist.

In der DE 10 2007 059 712.8 ist beispielsweise eine derartige Getriebeeinheit offenbart, wobei das Abtriebselement als Zahnsegment ausgeführt ist, welches um eine Drehachse gelagert ist. Dieses Zahnsegment ist in Wirkverbindung mit einem Sperrglied eines Kraftfahrzeuglenkradschlosses. Das Antriebselement wird hierbei durch ein Schneckenrad angetrieben. Hierbei kann die Getriebeeinheit sich in einem Freilaufzustand befinden, bei dem das Zahnsegment entkoppelt vom scheibenförmigen Antriebselement ist. Im Freilaufzustand übt ein Federelement eine definierte Kraft auf das Zahnsegment aus, wodurch bewirkt wird, dass das Zahnsegment zurück in Richtung des Antriebselementes gedrückt wird. Nachteiligerweise kann sich während des Freilaufzustandes ein ungewünschtes Geräusch ergeben, bei dem die Verzahnung des Zahnsegmentes gegen die Verzahnung des Antriebselementes stößt. Des Weiteren ist es denkbar, dass bei einem Wechsel vom Freilaufzustand in den Eingriffzustand das Abtriebselement nicht an der gewünschten Stelle in das Antriebselement eingreift, sondern es zu ungewollten Kollisionen mit den jeweiligen Verzahnungen kommen kann.

DE 10 2005 027 777 offenbart ein Lenkradchloss mit dem Merkmalen des Oberbegriffes des Anspruchs 1.

Es ist Aufgabe der vorliegenden Erfindung, eine Getriebeeinheit zu schaffen, die die oben genannten Nachteile vermeidet, wobei eine Getriebeeinheit bereitgestellt wird, die einen unendlichen Freilauf ermöglicht.

Zur Lösung dieser Aufgabe wird eine Getriebeeinheit mit den Merkmalen des Anspruches 1 vorgeschlagen. In den abhängigen Ansprüchen sind bevorzugte Weiterbildungen ausgeführt.

Dazu ist erfindungsgemäß vorgesehen, dass eine Selektoreinheit vorgesehen ist, die bei einem Wechsel vom Freilaufzustand in den Eingriffzustand mindestens eine fest definierte Eingriffstelle für das Abtriebselement innerhalb des Antriebselement vorbestimmt. Der Kern der Erfindung ist, dass dem Abtriebselement zumindest eine fest vorbestimmte Eingriffstelle am Antriebselement geschaffen wird, in die das Abtriebselement bei einem Wechsel vom Freilaufzustand in den Eingriffzustand bewegt werden kann. Während des Freilaufzustandes der Getriebeeinheit nimmt das Abtriebselement vorteilhafterweise eine Position ein, in der es unbeweglich zum Antriebselement angeordnet ist. Somit entsteht keine ungewollte Geräuschentwicklung während des Freilaufzustandes, das bedeutet, während das Antriebselement noch aktiviert ist und sich entsprechend relativ zum Abtriebselement bewegt, verharrt das Antriebselement in seiner Stellung ohne durch das sich bewegende Antriebselement mitbewegt zu werden. Die erfindungsgemäße Selektoreinheit bewirkt ferner, dass bei einem Wechsel vom Freilaufzustand in den Eingriffzustand keine ungewünschten Kollisionen beim Antriebselement mit dem Abtriebselement entstehen, wodurch eine zuverlässige Funktionsweise der Getriebeeinheit gewährleistet ist.

Vorteilhaft ist, dass die Selektoreinheit ein aktives Selektorelement und ein passives Selektorelement aufweist, wobei das aktive Selektorelement am Antriebselement und das passive Selektorelement am Abtriebselement vorgesehen ist. Somit weist vorteilhafterweise die Selektoreinheit zwei Baugruppen auf, wobei das aktive Selektorelement relativ zum passiven Selektorelement bewegbar ist. Zum Zeitpunkt des Wechsels vom Freilaufzustand in den Eingriffzustand steht das aktive Selektorelement vorteilhafterweise formschlüssig mit dem passiven Selektorelement in Wirkverbindung. Während des Freilaufzustandes liegt vorteilhafterweise das passive Selektorelement am aktiven Selektorelement an, ohne dass das passive Selektorelement in die Eingriffstelle des aktiven Selektorelementes sich erstreckt.

Zweckmäßigerweise ist vorgesehen, dass das Antriebselement und das Abtriebselement jeweils mit einer Verzahnung ausgeführt sind, wobei die Eingriffsstelle zwischen zwei Zahnelementen der Verzahnung des Antriebselementes angeordnet ist. Hierdurch wird bezweckt, dass die Verzahnung des Abtriebselementes zuverlässig beim Wechsel vom Freilaufzustand in den Eingriffzustand in die Verzahnung des Antriebselementes geführt bzw. "eingefädelt" wird, ohne dass es zu Verspannungen der ineinander eingreifenden Zahnelemente kommt.

In einer möglichen Alternative der Erfindung wirken zwei Zähne des Abtriebselementes als passive Selektorelemente, wobei das Abtriebselement zwischen den passiven Selektorelementen eine Vielzahl an Zahnelementen aufweist, die im Eingriffzustand mit den Zahnelementen des Antriebselementes zusammen wirken. Vorteilhafterweise sind die als passive Selektorelemente wirkende Zähne zu den Zahnelementen des Abtriebselementes vergrößert ausgeführt. Hierdurch wird bezweckt, dass während des Freilaufzustandes die "verkürzten" Zahnelemente des Abtriebselementes zu keiner Zeit in die Eingriffstelle am Antriebselement eingreifen können. Lediglich die vergrößerten Zähne, die als passive Selektorelemente dienen, können in Abhängigkeit von der Position des Antriebselementes in die Eingriffstelle am Antriebselement bewegt werden, wodurch zuverlässig ein Wechsel vom Freilaufzustand in den Eingriffzustand der Getriebeeinheit erzielt werden kann.

Das Antriebselement ist vorteilhafterweise um eine erste Achse drehbar gelagert. Die Verzahnung des Antriebselementes sowie des Abtriebselementes kann unterschiedliche Verzahnungsgeometrien aufweisen. Hierbei kann das Antriebselement und/oder das Abtriebselement als Stirnrad, Kegelrad, Schraubenrad, Kronrad oder als Schneckenrad ausgeführt sein. Das Antriebselement und/oder das Abtriebselement kann ferner in einer weiteren Möglichkeit der Erfindung als Zahnstange ausgebildet sein, die insbesondere linearverschiebbar zum Antriebselement bzw. zum Abtriebselement angeordnet ist.

Damit während des Wechsels vom Freilaufzustand in den Eingriffzustand das passive Selektorelement zuverlässig in Richtung des aktiven Selektorelementes gedrückt wird, ist mindestens ein Federelement am Abtriebselement angeordnet. Dieses Federelement übt eine definierte Kraft auf das Abtriebselement aus, wenn sich die Getriebeeinheit im Freilaufzustand befindet. Auch wenn im Freilaufzustand das Antriebselement bewegt wird, übt das Federelement auf das Abtriebselement eine Kraft aus, wodurch das passive Selektorelement stets am aktiven Selektorelement anliegt. Erst wenn die Eingriffstelle am Antriebselement eine entsprechende Position zum Abtriebselement aufweist, wird das passive Selektorelement über die Federkraft in die definierte Eingriffstelle des aktiven Selektorelementes bewegt. Vorteilhafterweise ist die Eingriffstelle des aktiven Selektorelementes als nutförmige Ausnehmung ausgeführt, die dem passiven Selektorelement in seiner geometrischen Form entsprechend angepasst ist.

Ein besonderer Vorteil der Erfindung ist, dass die Anordnung der Selektoreinheit eine Selbsthemmung der Getriebeeinheit bewirkt. Das bedeutet, dass im Freilaufszustand der Getriebeeinheit und bei einem deaktivierten Antriebselement eine etwaige Bewegung des Abtriebselementes nicht bewirken kann, dass ein Eingriffzustand der Getriebeeinheit erzielt werden kann, bei dem das Antriebselement mit dem Abtriebselement formschlüssig in Wirkverbindung steht und eine Kraftübertragung vom Abtriebselement auf das Antriebselement möglich wäre. Die Selbsthemmung wird dadurch erreicht, dass die Verzahnung des Abtriebselementes sowie das passive Selektorelement - bei einer etwaigen Bewegung des Abtriebselementes - stets entlang des aktiven Selektorelementes sich bewegen, aber dem passiven Selektorelement nicht ermöglicht wird, in die Eingriffstelle des aktiven Selektorelementes formschlüssig einzugreifen.

In einer möglichen Ausführungsform der Getriebeeinheit ist das aktive Selektorelement als eine Scheibe ausgeführt, die drehbar gelagert um die erste Achse am Antriebselement angeordnet ist, wobei das aktive Selektorelement verdrehfest zum Antriebselement angeordnet ist. Ebenfalls ist es denkbar, das aktive Selektorelement und das Antriebselement als ein gemeinsames Bauteil auszubilden.

Die erfindungsgemäße Getriebeeinheit mit dem beschriebenen unendlichen Freilauf wird zur Aktivierung eines Sperrelementes eines Lenkradschlosses eines Kraftfahrzeuges verwendet, das beispielsweise in der DE 10 2007 059 712.8 zum Einsatz kommt. Ebenfalls ist es denkbar, aber nicht beansprucht die Getriebeeinheit für ein Handschuhfach eines Kraftfahrzeuges einzusetzen. Ferner sind eine Vielzahl an Einsatzfeldern für eine derartige Getriebeeinheit denkbar aber nicht beansprucht, wie zum Beispiel zur Aktivierung eines Türschlosses oder eines elektrischen Fensterhebers eines Kraftfahrzeuges. Die Getriebeeinheit kann auch aber nicht beansprucht zur Bewegung einer Kamera zur Einparkhilfe genutzt werden. Falls die Kamera unbeweglich am Kraftfahrzeug angeordnet ist, kann die Getriebeeinheit zur Bewegung des Deckels genutzt werden, der in einer ersten Stellung die Kamera verdeckt und in einer zweiten Stellung das Sichtfeld für die Kamera freigibt.

Vorteilhafterweise ist das Antriebselement sowie das Abtriebselement Bestandteil einer Getriebestufe. Diese Getriebestufe kann innerhalb eines Getriebes eingebunden sein, die aus einer Vielzahl an Getriebestufen besteht.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine mögliche Ausführungsalternative einer erfindungsgemäßen Getriebeeinheit, die sich in einem Freilaufzustand befindet,
- Figur 2: die Getriebeeinheit gemäß Figur 1, wobei die Getriebeeinheit sich im Eingriffzustand befindet,
- Figur 3: die Getriebeeinheit gemäß Figur 1, die sich erneut im Freilaufzustand befindet und
- Figur 4: die Getriebeeinheit gemäß Figur 1 in einer Seitenansicht, wobei die Getriebeeinheit sich im Freilaufzustand befindet.

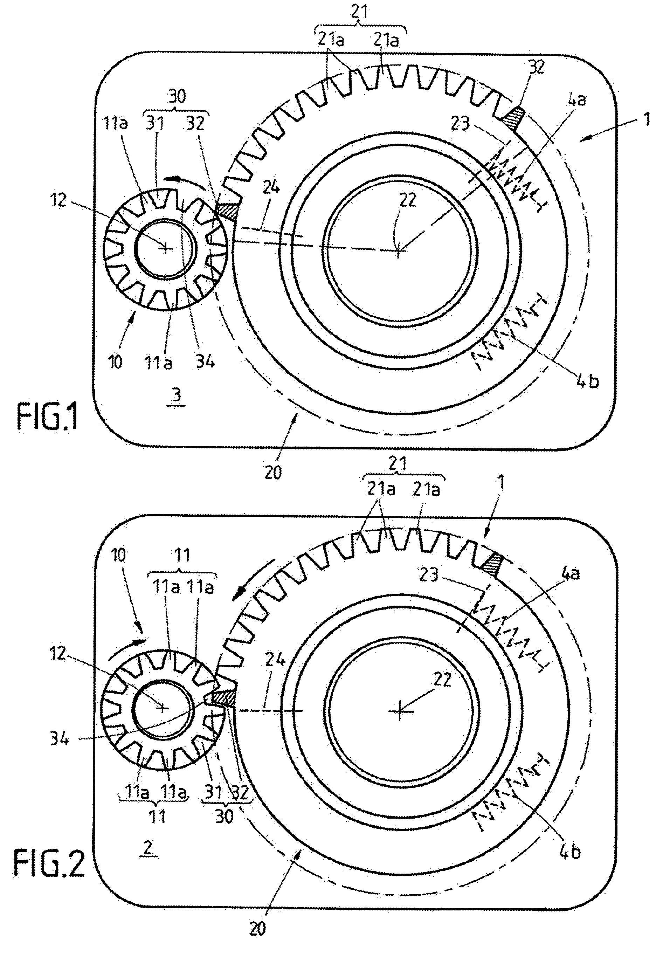

Im dargestellten Ausführungsbeispiel gemäß Figur 1 bis Figur 3 ist eine mögliche Getriebeeinheit 1 dargestellt, die ein Antriebselement 10 sowie ein Abtriebselement 20 aufweist. Beide Elemente 10,20 sind relativ beweglich zueinander angeordnet. Das Antriebselement 10 ist als Zahnrad 10 ausgebildet, welches um eine erste Achse 12 drehbar gelagert ist. Hierbei weist das Antriebselement 10 eine Verzahnung 11 auf, die mit einer Verzahnung 21 des Abtriebselementes 20 zusammenwirkt, welches in Figur 2 dargestellt ist, in der die Verzahnung 21 des Abtriebselementes 20 in die Verzahnung 11 des Antriebselementes 10 eingreift, worauf noch im Folgenden eingegangen wird.

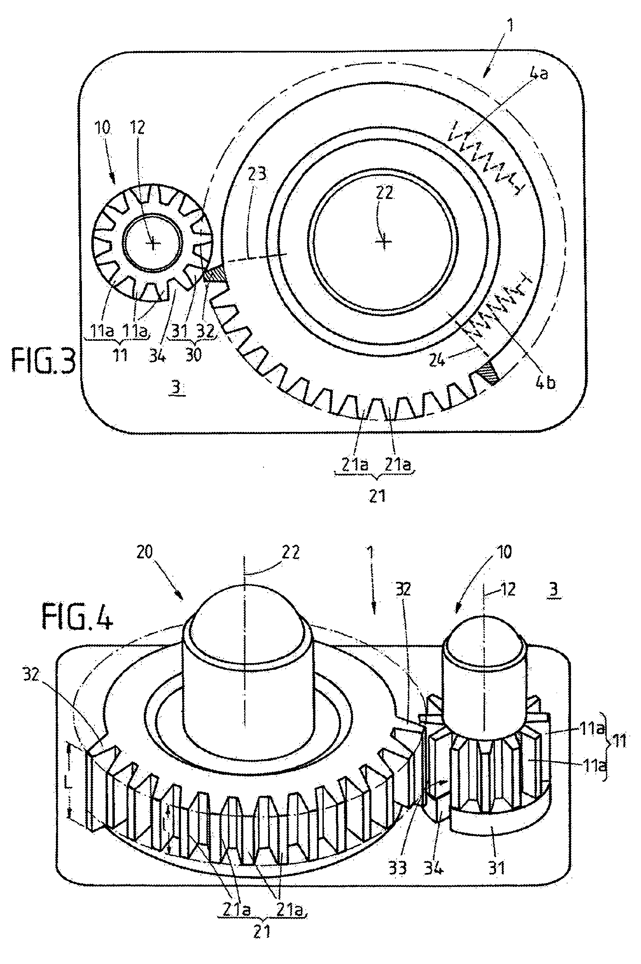

Alle Zahnelemente 11a des Antriebselementes 10 sind in ihrer Geometrie identisch ausgeführt. Im Gegensatz dazu weist die Verzahnung 21 des Abtriebselementes 20 zwei äußere Zähne 32 auf, die in ihrer Geometrie unterschiedlich zu den Zahnelementen 21a des Abtriebselementes 20 ausgebildet sind. Diese Zähne 32 sind schraffiert dargestellt. Wie in Figur 4 deutlich zu erkennen ist, sind die beiden äußeren Zähne 32 länger ausgebildet als die Zahnelemente 21a, die zwischen den Zähnen 32 angeordnet sind. Das bedeutet, dass die Zähne 32 parallel zur Achse 22 länger ausgeführt sind als die Zahnelemente 21a, die zwischen den Zähnen 32 sich befinden.

Die Getriebeeinheit 1 weist eine Selektoreinheit 30 auf, die sich aus einem aktiven Selektorelement 31 und einem passiven Selektorelement 32 zusammensetzt. Das aktive Selektorelement 31 befindet sich an dem Antriebselement 10, das besonders in Figur 4 zu erkennen ist. Gemäß des Ausführungsbeispiels ist das aktive Selektorelement 31 als eine Scheibe 31 ausgebildet, die drehbar gelagert um die erste Achse 12 am Antriebselement 10 befestigt ist. Hierbei ist das aktive Selektorelement 31 verdrehfest zum Antriebselement 10 angeordnet. Die als passive Selektorelemente 32 wirkenden Zähne 32 weisen eine derartige Länge L auf, dass die Zähne 32 bis zum aktiven Selektorelement 31, insbesondere bis zur Scheibe 31 sich erstrecken. Im Gegensatz dazu weisen die Zahnelemente 21a eine Länge I auf, wobei I < L ist, so dass die Zahnelemente 21a lediglich in die Zahnelemente 11a des Antriebselementes 10 eingreifen können und in keiner Lage des Abtriebselementes 20 das aktive Selektorelement 31 berühren.

Wie besonders in Figur 4 zu erkennen ist, ist das aktive Selektorelement 31 mit einer nutförmigen Ausnehmung 34 ausgeführt. Über die Ausnehmung 34 wird eine fest definierte Eingriffstelle 33 für das Abtriebselement 20 geschaffen.

Die parallel zur Drehachse 22 verlängerten Zähne 32 wirken als passive Selektorelemente 32. Solange sich das Antriebselement 10 gegen den Uhrzeigersinn um die Achse 12 gemäß Figur 1 bewegt, verbleibt das Abtriebselement 20 in der gezeigten Position. Ein erstes Federelement 4a übt gemäß Figur 1 eine Kraft auf das Abtriebselement 20 aus, wodurch das passive Selektorelement 32, insbesondere der linke Zahn 32 gegen das aktive Selektorelement 31 gedrückt wird. Das erste Federelement 4a ist hierbei gespannt. Während das Antriebselement 10 sich gegen den Uhrzeigersinn dreht, versucht das Abtriebselement 20 aufgrund der wirkenden Federkraft des Federelementes 4a gegen den Uhrzeigersinn um die zweite Achse 22 sich zu drehen. Da der verlängerte Zahn 32 jedoch gegen die Scheibe 31 gedrückt wird, erfolgt keine Drehung des Abtriebselementes 20 um die Achse 22. Dieser in Figur 1 dargestellte Zustand stellt einen unendlichen Freilauf dar, bei dem das Antriebselement 10 vom Abtriebselement 20 entkoppelt ist und somit keine Kraftübertragung vom Antriebselement 10 auf das Abtriebselement 20 bewirkt werden kann.

Erfolgt nun eine Umkehr der Drehrichtung des Antriebselementes 10 in Richtung des Uhrzeigersinnes, verbleibt das passive Selektorelement 32 solange anliegend am aktiven Selektorelement 31 bis die Ausnehmung 34 dem Zahn 32, der als passives Selektorelement 32 wirkt, gegenübersteht. In dieser Position des Antriebselementes 10 drückt das erste Federelement 4a das Abtriebselement 20 gegen den Uhrzeigersinn, wobei der verlängerte Zahn 32 in die Ausnehmung 34, das bedeutet in die Eingriffstelle 33 des aktiven Selektorelementes 31 bewegt wird und somit der Eingriffzustand 2 der Getriebeeinheit 1 erreicht wird, welches in Figur 2 dargestellt ist.

Solange das Antriebselement 10 sich nun im Uhrzeigersinn um die erste Achse 12 dreht, erfolgt eine Kraftübertragung auf das Abtriebselement 20, welches sich gegen den Uhrzeigersinn um die zweite Achse 22 dreht. Während des Eingriffzustandes 2 greift die Verzahnung 11 des Antriebselementes 10 in die Verzahnung 21, insbesondere in die Zahnelemente 21a ein, bis die Position des Abtriebselementes 20 erreicht ist, die in Figur 3 dargestellt ist. Ab einem bestimmten Drehwinkel des Abtriebselementes 20 verlässt die Verzahnung 21 mit ihren Zahnelementen 21a sowie den Zähnen 32 den Eingriff mit der Verzahnung 11 des Antriebselementes 10. In dieser Stellung ist das erste Federelement 4a in einem entspannten Zustand, ohne eine Kraft auf das Abtriebselement 20 auszuüben. Jedoch befindet sich ein zweites Federelement 4a in einem gespannten Zustand, bei dem eine Kraft auf das Abtriebselement 20 ausgeübt wird, die den Zahn 32, der als passives Selektorelement 32 wirkt, gegen die Scheibe 31 drückt. Solange sich das Antriebselement 10 weiter im Uhrzeigersinn um die erste Achse 12 dreht, verbleibt das Abtriebselement 20 in der in Figur 3 dargestellten Position. Dieser Freilaufzustand 3 gemäß Figur 3 wird erst dann aufgehoben, wenn eine erneute Drehrichtungsumkehr des Antriebselementes 10 erfolgt.

Wie in den Figuren 1 bis Figur 3 angedeutet ist, weist das Abtriebselement 20 eine erste Wandung 23 und eine zweite Wandung 24 auf, wobei die erste Wandung 23 dem ersten Federelement 4a und die zweite Wandung 24 dem zweiten Federelement 4b zugeordnet ist. In Figur 1 wirkt das erste Federelement 4a unmittelbar auf die erste Wandung 23, wobei das zweite Federelement 4b losgelöst ist von der zweiten Wandung 24. Während des Eingriffzustandes 2 ist es denkbar, dass das erste Federelement 4a noch eine gewisse Kraft auf die erste Wandung 23 ausübt. Vorteilhafterweise ist jedoch im Eingriffzustand 2 sowohl das erste Federelement 4a als auch das zweite Federelement 4b losgelöst von der ersten Wandung 23 bzw. von der zweiten Wandung 24. Gemäß Figur 3 ist das erste Federelement 4a beabstandet von der ersten Wandung 23, wobei das zweite Federelement 4b auf die zweite Wandung 24 eine gewisse Kraft ausübt. Alternative Ausführungsformen das Abtriebselement 20 federbelastet im Freilaufzustand auszugestalten sind selbstverständlich denkbar, welches explizit nicht dargestellt ist.

Das Abtriebselement 20 kann mittelbar oder unmittelbar mit einem zu bewegenden Glied in Wirkverbindung stehen, wodurch über die entsprechende Bewegung des Abtriebselementes 20 eine Bewegung des explizit nicht dargestellten Gliedes erzielt werden kann. Dieses Glied kann beispielsweise ein Sperrglied einer Lenkradverriegelung darstellen, welches in eine Entriegelungsstellung und/oder eine Verriegelungsstellung über eine entsprechende Bewegung des Abtriebselementes 20 bewegt werden kann. Ebenfalls ist es denkbar, dass das Glied Bestandteil eines Schlosses eines Handschuhfaches innerhalb eines Kraftfahrzeuges ist. Weitere Anwendungsbeispiele sind ebenfalls möglich, wie beispielsweise der Einsatz dieser Getriebeeinheit 1 für einen elektrischen Fensterheber, bei dem das Abtriebselement 20 in Wirkverbindung mit der zu bewegenden Fensterscheibe steht. Die Getriebeeinheit 1 kann auch in einem elektromechanischen Kraftfahrzeugtürschloss zum Einsatz kommen.

Alternativ zu dem dargestellten Ausführungsbeispiel kann das Abtriebselement 20 ebenfalls als Zahnstange ausgebildet sein, die linearverschiebbar zum Antriebselement 10 angeordnet ist, welches explizit nicht dargestellt ist. Die beiden äußeren Zähne dieser Zahnstange können hierbei als vergrößerte Zähne ausgeführt sein und dienen wie im dargestellten Ausführungsbeispiel gemäß Figur 1 bis Figur 4 als passive Selektorelemente 32. Diese Zahnstange ist ebenfalls in ihrem Freilaufzustand federbelastet, worauf auf die allgemeine Funktionsweise - um Wiederholungen zu vermeiden - auf die Beschreibung gemäß Figur 1 bis Figur 4 verwiesen wird.

Das Abtriebselement 20 kann alternativ zum Zahnrad gemäß Figur 1 bis Figur 4 auch als Zahnsegment ausgeführt sein, welches in gestrichelter Darstellungsform in Figur 1 angedeutet ist und beispielsweise in der DE 10 2007 059 712.8 zum Einsatz kommt. Dieses Zahnsegment ist ebenfalls um die zweite Achse 22 drehbar gelagert und weist an seinem äußeren Rand die Verzahnung 21, insbesondere die Zahnelemente 21a sowie die äußeren vergrößerten Zähne 32 auf, die als passive Selektorelemente 32 wirken. Auch dieses Zahnsegment ist federbelastet im Freilaufzustand, so dass um Wiederholungen zu vermeiden auf die Funktionsweise der Getriebeeinheit 1 gemäß Figur 1 bis Figur 4 verwiesen wird.

### Bezugszeichenliste

- 1: Getriebeeinheit
- 2: Eingriffzustand
- 3: Freilaufzustand
- 4a: erstes Federelement
- 4b: zweites Federelement

- 10: Antriebselement, Zahnrad
- 11: Verzahnung
- 11a: Zahnelement
- 12: erste Achse

- 20: Abtriebselement
- 21: Verzahnung
- 21a: Zahnelement
- 22: zweite Achse
- 23: erste Wandung
- 24: zweite Wandung

- 30: Selektoreinheit
- 31: aktives Selektorelement, Scheibe
- 32: passives Selektorelement, Zahn
- 33: Eingriffstelle
- 34: Ausnehmung

## Patentansprüche

1. Lenkradschloss mit Getriebeeinheit (1) zur Aktivierung eines Sperrelementes eines Lenkradschlosses eines Kraftfahrzeuges mit einem Antriebselement (10) und einem Abtriebselement (20), die relativ beweglich zueinander angeordnet sind, wobei
in einem Eingriffzustand (2) das Antriebselement (10) mit dem Abtriebselement (20) formschlüssig in Wirkverbindung steht, so dass eine Kraftübertragung vom Antriebselement (10) auf das Abtriebselement (20) erzielbar ist, und
in einem Freilaufzustand (3) das Antriebselement (10) vom Abtriebselement (20) entkoppelt ist,
**dadurch gekennzeichnet,**
**dass** eine Selektoreinheit (30) vorgesehen ist, die bei einem Wechsel vom Freilaufzustand (3) in den Eingriffzustand (2) mindestens eine fest definierte Eingriffstelle (33) für das Abtriebselement (20) innerhalb des Antriebselements (10) vorbestimmt.

2. Lenkradschloss nach Anspruch 1,
**dadurch gekennzeichnet,**
**dass** die Selektoreinheit (30) ein aktives Selektorelement (31) und ein passives Selektorelement (32) aufweist, wobei das aktive Selektorelement (32) am Antriebselement (10) und das passive Selektorelement (32) am Abtriebselement (20) vorgesehen ist.

3. Lenkradschloss nach Anspruch 2,
**dadurch gekennzeichnet,**
**dass** lediglich bei einem Wechsel vom Freilaufzustand (3) in den Eingriffzustand (2) das aktive Selektorelement (31) formschlüssig mit dem passiven Selektorelement (32) in Wirkverbindung steht.

4. Lenkradschloss nach einem der vorhergehenden Ansprüchen,
**dadurch gekennzeichnet,**
**dass** das Antriebselement (10) und das Abtriebselement (20) jeweils mit einer Verzahnung (11,21) ausgeführt sind, wobei die Eingriffsstelle (33) zwischen zwei Zahnelementen (11 a) der Verzahnung (11) des Antriebselementes (10) angeordnet ist.

5. Lenkradschloss nach einem der vorhergehenden Ansprüchen,
**dadurch gekennzeichnet,**
**dass** zwei Zähne (32) des Abtriebselementes (20) als passive Selektorelemente (32) wirken, wobei das Abtriebselement (20) zwischen den passiven Selektorelementen (32) eine Vielzahl an Zahnelementen (21a) aufweist, die im Eingriffzustand (2) mit den Zahnelementen (11a) des Antriebselementes (10) zusammenwirken, wobei insbesondere die als passive Selektorelemente (32) wirkende Zähne (32) zu den Zahnelementen (11a) des Abtriebselementes (10) vergrößert ausgeführt sind.

6. Lenkradschloss nach einem der vorhergehenden Ansprüchen,
**dadurch gekennzeichnet,**
**dass** das Antriebselement (10) um eine erste Achse (12) drehbar gelagert ist, wobei insbesondere das Abtriebselement (20) um eine zweite Achse (22), die beabstandet zur ersten Achse (12) ist, drehbar gelagert ist.

7. Lenkradschloss nach einem der vorhergehenden Ansprüchen,
**dadurch gekennzeichnet,**
**dass** das Abtriebselement (20) als Zahnstange ausgebildet ist, die insbesondere linear verschiebbar zum Antriebselement (10) angeordnet ist.

8. Lenkradschloss nach einem der vorhergehenden Ansprüchen,
**dadurch gekennzeichnet,**
**dass** mindestens ein Federelement (4) derart am Abtriebselement (20) angeordnet ist, dass im Freilaufzustand (3) eine Kraft auf das Abtriebselement (20) wirkt, wodurch das passive Selektorelement (32) in Richtung des aktiven Selektorelementes (31) gedrückt wird, insbesondere im Freilaufzustand (3) das passive Selektorelement (32) am aktiven Selektorelement (31) anliegt.

9. Lenkradschloss nach einem der vorhergehenden Ansprüchen,
**dadurch gekennzeichnet,**
**dass** die Anordnung der Selektoreinheit (30) eine Selbsthemmung der Getriebeeinheit (1) bewirkt.

10. Lenkradschloss nach einem der vorhergehenden Ansprüchen,
**dadurch gekennzeichnet,**
**dass** das aktive Selektorelement (31) als eine Scheibe (31) ausgeführt ist, die drehbar gelagert um die erste Achse (12) am Antriebselementes (10) angeordnet ist, wobei das aktive Selektorelement (31) verdrehfest zum Antriebselement (10) angeordnet ist.

11. Lenkradschloss nach einem der vorhergehenden Ansprüchen,
**dadurch gekennzeichnet,**
**dass** das aktive Selektorelement (31) und das Antriebselement (10) ein gemeinsames Bauteil bilden.

12. Lenkradschloss nach einem der vorhergehenden Ansprüchen,
**dadurch gekennzeichnet,**
**dass** die Eingriffsstelle (33) des aktiven Selektorelements (31) als nutförmige Ausnehmung (34) ausgeführt ist, die dem passiven Selektorelement (32) entsprechend angepasst ist.

## Claims

1. Steering lock with a gear unit (1) for activation of a locking element of a steering lock of a motor vehicle with a drive element (10) and an output element (20), which are assembled in a relatively movable way towards one another, wherein in the engagement condition (2), the drive element (10) is in an operative connection with the output element (20) by form closure, so that a force transfer from the drive element (10) towards the output element (20) can be achieved, and in a free wheel condition (3) the drive element (10) is decoupled from the output element (20),
**characterized in that**
a selector unit (30) is intended, which predetermines at least one defined engagement area (33) for the output element (20) within the drive element (10) during an exchange from the free wheel condition (3) to the engagement condition (2).

2. Steering lock according to claim 1,
**characterized in that**
the selector unit (30) comprises an active selector element (31) and a passive selector element (32), wherein the active selector element (31) is intended at the drive element (10) and the passive selector element (32) is intended at the output element (20).

3. Steering lock according to claim 2,
**characterized in that**
only during an exchange from the free wheel condition (3) towards the engagement condition (2) the active selector element (31) is in an operative connection with the passive selector element (32) by form closure.

4. Steering lock according to one of the preceding claims,
**characterized in that**
the drive element (10) and the output element (20) each comprise a denticulation (11, 21) wherein the engagement area (33) is assembled between two tooth elements (11 a) of the denticulation (11) of the drive element (10).

5. Steering lock according to one of the preceding claims,
**characterized in that**
two teeth (32) of the output element (20) act as passive selector elements (32), wherein the output element (20) comprises a plurality of tooth elements (21 a) between the passive selector element (32), which in an engagement condition (2) interact with the tooth elements (11 a) of the drive element (10), wherein particularly the teeth (32) acting as passive selector elements (32) towards the tooth elements (11 a) of the drive element (10) are enlarged.

6. Steering lock according to one of the preceding claims,
**characterized in that**
the drive element (10) is pivotable mounted about a first axis (12), wherein particularly the output element (20) is pivotable mounted about a second axis (22), which is spaced towards the fist axis (12).

7. Steering lock according to one of the preceding claims,
**characterized in that**
the output element (20) is shaped as gear rack, which is particularly assembled in a linear slidable way towards the drive element (10).

8. Steering lock according to one of the preceding claims,
**characterized in that**
at least one spring element (4) is assembled at the output element (20) in a way that in a free wheel condition (3) a force is acting to the output element (20), whereby the passive selector element (32) is pushed towards the direction of the active selector element (31), particularly in the free wheel condition (3) the passive selector element (32) rests against the active selector element (31).

9. Steering lock according to one of the preceding claims,
**characterized in that**
the assembly of the selector unit (30) causes a self-locking of the gear unit (1).

10. Steering lock according to one of the preceding claims,
**characterized in that**
the active selector element (31) is shaped as a disk (31), which is pivotable mounted about the first axis (12) at the drive element (10), wherein the active selector element (31) is mounted at the drive element (10) in a torque proof way.

11. Steering lock according to one of the preceding claims,
**characterized in that**
the active selector element (31) and the drive element (10) build a common component.

12. Steering lock according to one of the preceding claims,
**characterized in that**
the engagement area (33) of the active selector element (31) is accomplished as a groove like recess (34), which is appropriately adapted to the passive selector element (32).

## Revendications

1. Antivol de direction équipé d'une unité de transmission (1), en vue de l'activation d'un élément de blocage d'un antivol de direction d'un véhicule automobile, comprenant un élément d'entraînement (10) et un élément entraîné (20) agencés avec mobilité relative, sachant
que, dans un état (2) de prise mutuelle instaurée, ledit élément d'entraînement (10) est en liaison opérante par complémentarité de formes avec ledit élément entraîné (20), permettant ainsi d'obtenir une transmission de forces audit élément entraîné (20), à partir dudit élément d'entraînement (10), et
que ledit élément d'entraînement (10) est désaccouplé d'avec ledit élément entraîné (20) dans un état (3) de roue libre,
**caractérisé par le fait**
**qu'**il est prévu une unité de sélection (30) qui, lors d'un passage de l'état (3) de roue libre à l'état (2) de prise mutuelle instaurée, prédétermine au moins une zone d'engrènement (33) dédiée à l'élément entraîné (20), fermement définie à l'intérieur de l'élément d'entraînement (10).

2. Antivol de direction selon la revendication 1,
**caractérisé par le fait**
**que** l'unité de sélection (30) comprend un élément sélecteur (31) actif et un élément sélecteur (32) passif, ledit élément sélecteur (31) actif et ledit élément sélecteur (32) passif étant prévus, respectivement, sur l'élément d'entraînement (10) et sur l'élément entraîné (20).

3. Antivol de direction selon la revendication 2,
**caractérisé par le fait**
**que** l'élément sélecteur (31) actif est en liaison opérante par complémentarité de formes, avec l'élément sélecteur (32) passif, uniquement lors d'un passage de l'état (3) de roue libre à l'état (2) de prise mutuelle instaurée.

4. Antivol de direction selon l'une des revendications précédentes,
**caractérisé par le fait**
**que** l'élément d'entraînement (10) et l'élément entraîné (20) sont respectivement pourvus d'une denture (11, 21), la zone d'engrènement (33) étant située entre deux éléments dentés (11a) de la denture (11) dudit élément d'entraînement (10).

5. Antivol de direction selon l'une des revendications précédentes,
**caractérisé par le fait**
**que** deux dents (32) de l'élément entraîné (20) agissent comme des éléments sélecteurs (32) passifs, ledit élément entraîné (20) comportant, entre lesdits éléments sélecteurs (32) passifs, une multiplicité d'éléments dentés (21a) qui coopèrent avec les éléments dentés (11a) de l'élément d'entraînement (10), à l'état (2) de prise mutuelle instaurée, sachant notamment que lesdites dents (32), agissant comme des éléments sélecteurs (32) passifs, sont de plus fort dimensionnement que lesdits éléments dentés (11a) dudit élément d'entraînement (10).

6. Antivol de direction selon l'une des revendications précédentes,
**caractérisé par le fait**
**que** l'élément d'entraînement (10) est monté à rotation autour d'un premier axe (12), l'élément entraîné (20) étant notamment monté à rotation autour d'un second axe (22) qui est distant dudit premier axe (12).

7. Antivol de direction selon l'une des revendications précédentes,
**caractérisé par le fait**
**que** l'élément entraîné (20) est réalisé sous la forme d'une crémaillère agencée, en particulier, à coulissement linéaire vis-à-vis de l'élément d'entraînement (10).

8. Antivol de direction selon l'une des revendications précédentes,
**caractérisé par le fait**
**qu'**au moins un élément élastique (4) est disposé, sur l'élément entraîné (20), de façon telle qu'une force agisse sur ledit élément entraîné (20) à l'état (3) de roue libre, de sorte que l'élément sélecteur (32) passif est poussé en direction de l'élément sélecteur (31) actif, et que ledit élément sélecteur (32) passif est notamment en applique contre ledit élément sélecteur (31) actif à l'état (3) de roue libre.

9. Antivol de direction selon l'une des revendications précédentes,
**caractérisé par le fait**
**que** la disposition de l'unité de sélection (30) provoque un autoblocage de l'unité de transmission (1).

10. Antivol de direction selon l'une des revendications précédentes,
**caractérisé par le fait**
**que** l'élément sélecteur (31) actif est réalisé sous la forme d'un disque (31) agencé à rotation autour du premier axe (12), sur l'élément d'entraînement (10), ledit élément sélecteur (31) actif étant agencé avec verrouillage rotatif vis-à-vis dudit élément d'entraînement (10).

11. Antivol de direction selon l'une des revendications précédentes,
**caractérisé par le fait**
**que** l'élément sélecteur (31) actif et l'élément d'entraînement (10) forment un ensemble structurel unitaire commun.

12. Antivol de direction selon l'une des revendications précédentes,
**caractérisé par le fait**
**que** la zone d'engrènement (33) de l'élément sélecteur (31) actif est réalisée sous la forme d'un évidement (34) configuré en une rainure, adapté pour concorder avec l'élément sélecteur (32) passif.
